# EUROPÄISCHE PATENTANMELDUNG

(11) **EP 3 331 140 A1**
(43) Veröffentlichungstag der Anmeldung: **06.06.2018**
(21) Anmeldenummer: 16202068.9
(22) Anmeldetag: 02.12.2016
(51) Int. Cl.: H02K 21/24, H02K 1/02, H02K 1/14, H02K 1/27, H02K 15/02

(54) **SCHEIBENLÄUFERMOTOR**

(71) Anmelder: Miba Sinter Austria GmbH, 4663 Laakirchen (AT)
(72) Erfinder: Sandner, Christian, 4810 Gmunden (AT)
(74) Vertreter: Jell, Friedrich

(57) **Zusammenfassung**

Es wird ein Scheibenläufermotor (1) gezeigt, mit mindestens einem Rotor (2), mit wenigstens einem Stator (3), der ein Statorjoch (7) und mindestens einen aus einem weichmagnetischen Pulverwerkstoff hergestellten Statorzahn (8) aufweist, welcher Statorzahn (8) einen Zahnhals (9) und einen an den Zahnhals (9) anschließenden und die Polfläche (11) des Statorzahns (8) ausbildenden Zahnkopf (10) aufweist, und mit einem Befestigungsmittel (12). Um diesen konstruktiv einfach und standfesten zu gestelten, wird vorgeschlagen, dass der Statorzahn (8) eine Befestigungsöffnung (13) aufweist, welche von der Polfläche (11) des Statorzahns (8) ausgehend dessen Zahnkopf (10) und Zahnhals (9) durchdringt, und dass das Befestigungsmittel (12) mindestens ein mechanisches Verbindungselement (14) umfasst, das in der Befestigungsöffnung (13) gegenüber der Polfläche (11) versenkt aufgenommen ist und den Statorzahn (8) am Scheibenläufermotor (1) befestigt.

## Beschreibung

Die Erfindung betrifft einen Scheibenläufermotor mit mindestens einem Rotor, mit wenigstens einem Stator, der ein Statorjoch und mindestens einen aus einem weichmagnetischen Pulverwerkstoff hergestellten Statorzahn aufweist, welcher Statorzahn einen Zahnhals und einen an den Zahnhals anschließenden und die Polfläche des Statorzahns ausbildenden Zahnkopf aufweist, und mit einem Befestigungsmittel.

Aus dem Stand der Technik (AT514709B1) sind Scheibenläufermotoren bekannt, bei denen Statorjoch und Statorzähne aus einem weichmagnetischen Pulverwerkstoff bestehen. Die Zahnhälse der Statorzähne werden hierbei vom Statorjoch ausgebildet, auf welche Zahnhälse der Zahnkopf der Statorzähne aufgesetzt und stoffschlüssig befestigt wird. Die Verwendung von weichmagnetischen Pulverwerkstoffen kann zwar die Leistungsdichte von Scheibenläufermotoren deutlich erhöhen - nachteilig bedarf es jedoch bei größeren bzw. leistungsstärkeren Scheibenläufermotoren durch die einstückige pulvermetallurgische Ausbildung von Statorjoch und Zahnhälsen eines erhöhten Herstellungsaufwands. Dies kann außerdem zu einem erhöhten Konstruktionsaufwand am Scheibenläufermotor führen.

Die Erfindung hat sich daher die Aufgabe gestellt, einen Scheibenläufermotor der eingangs erwähnten Art dahingehend zu verbessern, dass trotz hoher Leistungsdichte eine einfache Herstellung mit geringem Konstruktionsaufwand am Scheibenläufermotor ermöglicht wird.

Die Erfindung löst die Aufgabe dadurch, dass der Statorzahn eine Befestigungsöffnung aufweist, welche von der Polfläche des Statorzahns ausgehend dessen Zahnkopf und Zahnhals durchdringt, und dass das Befestigungsmittel mindestens ein mechanisches Verbindungselement umfasst, das in der Befestigungsöffnung gegenüber der Polfläche versenkt aufgenommen ist und den Statorzahn am Scheibenläufermotor befestigt.

Weist der Statorzahn eine Befestigungsöffnung auf, welche von der Polfläche des Statorzahns ausgehend dessen Zahnkopf und Zahnhals durchdringt, kann ein einfaches Halten des Statorjoch am Statorzahn ermöglicht werden - wobei solch eine bis zur Polfläche reichende Öffnung im Statorzahn die Querschnittsfläche zur magnetischen Flussführung verringert - dies aufgrund der hohen konstruktiven Freiheit des aus weichmagnetischem Pulververbundwerkstoff bestehenden Statorzahns jedoch nicht zu einer verminderten Leistungsdichte am Scheibenläufermotor führt. Auf diese Weise wird das besonders einfache und effektive Vorsehen des Befestigungsmittels ermöglicht, welches mindestens ein mechanisches Verbindungselement umfasst, das in der Befestigungsöffnung gegenüber der Polfläche versenkt aufgenommen ist und den Statorzahn am Scheibenläufermotor befestigt. Aufgrund der vergleichsweise einfachen Zugänglichkeit zum Befestigungsmittel können auch Herstellung und/oder Wartung des Scheibenläufermotors erheblich erleichtert werden. Es hat sich herausgestellt, dass zusätzlich zur vereinfachten Herstellung und Handhabung eines Scheibenläufermotors das Halten des Statorzahns mechanisch besonders belastbar und unter Wahrung geringer Toleranzen ermöglicht werden kann. Die Standfestigkeit des Scheibenläufermotors kann sich damit weiter erhöhen. Erfindungsgemäß wird daher unter anderem die konstruktive Freiheit in der Flussführung eines aus einem weichmagnetischen Pulververbundwerkstoff bestehenden Statorzahns genutzt, um einen konstruktiv einfachen Scheibenläufermotor mit hoher Leistungsdichte zu schaffen.

Weist der Scheibenläufermotor zudem ein Gehäuse auf und ist das Verbindungselement am Gehäuse befestigt, kann eine standfeste Befestigung des Statorzahns aus einem weichmagnetischen Pulverwerkstoff ermöglicht werden. Die Standfestigkeit des Scheibenläufermotors ist damit verbesserbar. Zudem kann diese Art der Befestigung am Gehäuse die Kühlung der Statorwicklung an den Statorzähnen verbessern, was die Leistungsdichte des Scheibenläufermotors erhöhen kann. Im Allgemeinen wird erwähnt, dass das Gehäuse aus einer Aluminiumlegierung bestehen kann, um die Kühlung noch zu verbessern.

Weist das Statorjoch eine, insbesondere axial verlaufende, Aufnahme auf, in welche der Zahnhals des Statorzahns eingesetzt ist, so kann ein in der Herstellung einfacher Scheibenläufermotor geschaffen werden. Zudem kann der magnetische Widerstand zwischen Statorzahn und Statorjoch verringert werden, wodurch ein besonders leistungsfähiger Scheibenläufermotor geschaffen werden kann.

Ein besonders standfester Scheibenläufermotor kann zudem geschaffen werden, wenn der Zahnhals des Statorzahns durch die das Statorjoch durchdringende Aufnahme verläuft. Insbesondere kann hierbei der Statorzahn standfest mit dem Gehäuse des Scheibenläufermotors einen festen Verbund eingehen und gleichzeitig ein geringer magnetischer Widerstand zwischen Statorzahn und Statorjoch erreicht werden.

Besonders vorteilhafte magnetische Eigenschaften des Statorzahns können erreicht werden, wenn der Statorzahn aus SMC ("soft magnetic composites") besteht. So kann aufgrund der sehr geringen elektrischen Leitfähigkeit des SMC-Materials auf eine zusätzliche Isolierung zwischen den Statorzähnen und dem Statorjoch verzichtet werden. Zugleich können Verluste in der magnetischen Flussführung vermindert - und in weiterer Folge die Flussdichte für eine verbesserte Leistungsdichte des Scheibenläufermotors erhöht werden.

Wird das Statorjoch von einem Blechpaket ausgebildet, so kann die Stabilität des Statorjochs erhöht werden. Durch die Kombination eines als Blechpaket ausgeführten Statorjochs mit hoher Stabilität sowie Statorzähnen aus einem weichmagnetischem Pulverwerkstoff mit hohen magnetischen Flussdichten kann ein besonders standfester Scheibenläufermotor mit kompakter Bauform geschaffen werden, welcher sich zudem durch Kosteneffizienz in der Herstellung auszeichnet.

Ist das mechanische Verbindungselement eine Schraube, insbesondere eine Dehnschraube, so sind die mechanische Belastbarkeit der Stators und damit die Standfestigkeit des Scheibenläufermotors weiter verbesserbar. Insbesondere kann eine Dehnschraube unter Vorspannung Statorzahn und Gehäuse kraftschlüssig miteinander verbinden. Durch die standfeste Verbindung zwischen Statorzahn und Gehäuse kann eine Spielpassung für das Statorjoch geschaffen werden, wodurch sich einfache Montageverhältnisse am Scheibenläufermotor ergeben können und zudem für einen geringen magnetischen Widerstand zwischen Statorjoch und Statorzahn gesorgt wird. Der erfindungsgemäße Scheibenläufermotor kann daher standfest eine hohe Leistungsdichte sicherstellen.

Weist die Befestigungsöffnung ein Loch und eine an das Loch und an die Polfläche des Zahnkopfs anschließende Vertiefung auf, die gegenüber dem Loch eine größere Querschnittsfläche aufweist, so ist das Verbindungselement auf einfache Weise in den Statorzahn versenkbar. Auch kann dadurch die Integrität der Polfläche gewahrt bleiben bzw. sohin eine besonders kompakte Bauform des Scheibenläufermotors erreicht werden.

Die Leistungsdichte des Scheibenläufermotors kann weiter erhöht werden, wenn der Zahnkopf dem Zahnhals radial übersteht. Insbesondere können dadurch die durch die Verbindungselemente reduzierten Polflächen vergrößert werden. Ein effizienterer Scheibenläufermotor kann somit geschaffen werden.

Ist die Befestigungsöffnung an der Polfläche durch eine Kappe aus einem weichmagnetischen Pulverwerkstoff verschlossen, muss trotz einer zur Polfläche reichenden Befestigungsöffnung keine Reduktion von magnetisch aktiver Polfläche gerechnet werden. Die Leistungsdichte des erfindungsgemäßen Scheibenläufermotors kann damit weiter verbessert werden.

Weist das Statorjoch eine, insbesondere schlitzförmige, Freistellung auf, die sich ausgehend von einer radialen Seite des Statorjochs bis hin zum Statorzahn erstreckt, so können über den durch die Statorzähne fließenden magnetischen Fluss in das Statorjoch induzierte magnetische Kreisströme unterdrückt werden, da durch die Freistellung die Ausbildung einer elektrischen Leiterschleife um den Statorzahn verhindert wird. Ein effizienterer Scheibenläufermotor mit höheren Leistungsdichten kann somit geschaffen werden.

Verläuft die Freistellung zudem radial, so kann eine konstruktiv besonders einfache, die Stabilität des Statorjochs trotzdem wenig beeinträchtigende Freistellung geschaffen werden - wodurch die Standfestigkeit des Scheibenläufermotors erhöht wird.

Durchdringt die Freistellung das Statorjoch, so kann eine besonders effiziente Unterdrückung der induzierten magnetischen Kreisströme erreicht werden, wodurch die Leistungsfähigkeit des Scheibenläufermotors weiter verbessert werden kann.

In bekannter Weise kann der Scheibenläufermotor eine Statorwicklung aufweisen, die den Zahnhals bewickelt bzw. der Zahnhals dadurch auch tragen kann.

In den Figuren ist beispielsweise der Erfindungsgegenstand anhand mehrerer Ausführungsvarianten dargestellt. Es zeigen
- Fig. 1: eine teilweise Darstellung des erfindungsgemäßen Scheibenläufermotors in teilweise aufgerissener Draufsicht,
- Fig. 2: eine horizontale Schnittansicht der Fig. 1 durch den Stator und
- Fig. 3: eine vertikale Schnittansicht der Fig. 1 durch den Scheibenläufermotor.

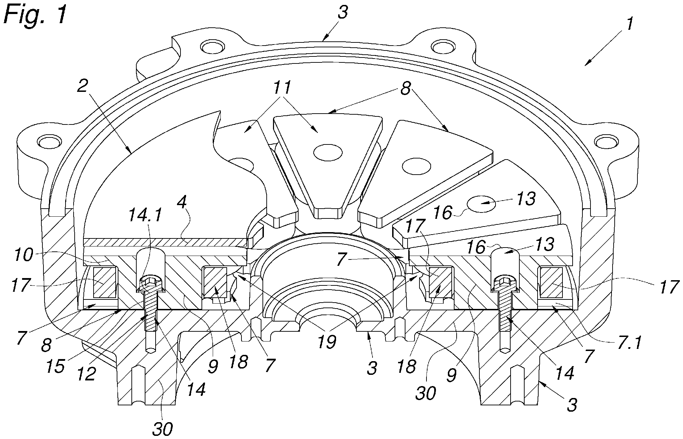

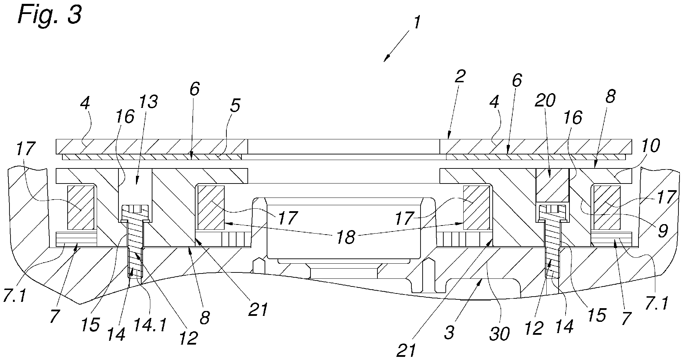

Gemäß Fig. 1 wird ein erfindungsgemäßer Scheibenläufermotor 1 teilweise dargestellt gezeigt, welcher einen Rotor 2 und einen Stator 3 aufweist. Rotor 2 und Stator 3 weisen jeweils eine radialsymmetrische, scheibenförmige Gestalt auf, wobei der Rotor 3 als Trägerscheibe 4 mit Ferritmagneten 5 dargestellt wird, die permanentmagneterregt drehmomentbildende Pole 6 ausbilden - wie dies in Fig. 3 näher dargestellt ist. Es ist ebenso vorstellbar, dass die Pole 6 beispielsweise zur berührungslosen Lagerung des Rotors 2 dienen, was jedoch in den Figuren nicht dargestellt wurde.

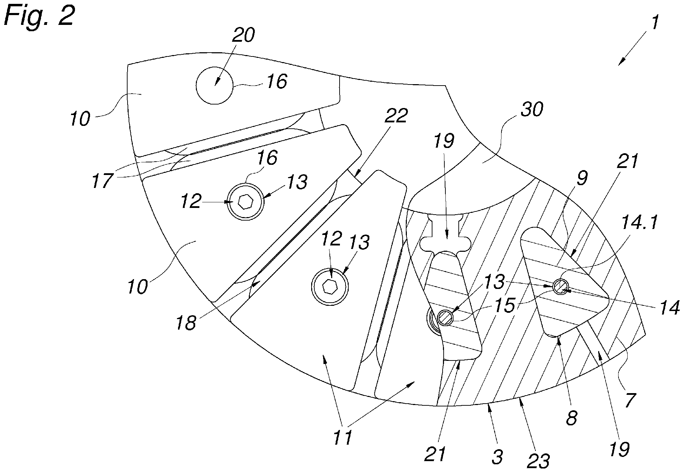

Wie der Fig. 2 zu entnehmen, weist der Stator 3 ein Statorjoch 7 und mehrere Statorzähne 8 auf. Zudem weist der Scheibenläufermotor 1 ein Gehäuse 30 als stabilitätsgebendes Element auf. Die einstückigen Statorzähne 8 gliedern sich in einen Zahnhals 9 und einen an den Zahnhals 9 anschließenden Zahnkopf 10, welcher die Polfläche 11 des Statorzahns 8 formt. Das Statorjoch 7 kann, insbesondere um die Stabilität des Stators 3 zu verbessern, als Blechpaket 7.1 ausgeführt sein oder auch aus einem SMC-Werkstoff bestehen.

Wie insbesondere den Fig. 1 und 2 entnommen werden kann, sind in dem Statorjoch 7, insbesondere in dessen axialer Richtung verlaufende Aufnahmen 21 vorgesehen. Die Aufnahmen 21 durchdringen dabei das Statorjoch in axialer Richtung vollständig. In diesen Aufnahmen 21 sind die Statorzähne 8 eingesetzt, wobei diese mit deren Zahnhälsen 9 durch die Aufnahme 21 verlaufen und somit das Statorjoch 7 durchdringen. Ein geringer magnetischer Widerstand zwischen Statorzahn 8 und Statorjoch 7 kann sich somit einstellen, wobei die Statorzähne 8 jedoch standfest mit dem Gehäuse 30 verbunden bleiben.

Die Statorzähne 8 sind dabei vorteilhafterweise radial äquidistant in den Aufnahmen 21 im Statorjoch 7 verteilt und bestehen aus einem weichmagnetischen Pulverwerkstoff, insbesondere einem SMC-Pulverwerkstoff. Das Statorjoch 7 wird an den Statorzähnen 8 fest gehalten.

Die Statorzähne 8 bzw. die Zahnhälse 9 der Statorzähne 8 sind mit Spulen 17 einer elektrischen Statorwicklung 18 bewickelt, die vorzugsweise dreisträngig (U, V, W) ausgebildet sind - was in den Figuren allerdings nicht dargestellt wurde.

Erfindungsgemäß weisen diese Statorzähne 8 je eine Befestigungsöffnung 13 auf, welche von der Polfläche 11 des jeweiligen Statorzahns 8 ausgehend dessen Zahnkopf 10 und Zahnhals 9 durchdringen. Konstruktiv einfach kann diese Befestigungsöffnung als Bohrung im Statorzahn 8 ausgeführt sein. In dieser Befestigungsöffnung 13 ist ein mechanisches Verbindungselement 14 als Befestigungsmittel 12 vorgesehen. Die Statorzähne 8 sind durch mechanische Verbindungselemente 14 mit dem Gehäuse 30 des Scheibenläufermotors 1 lösbar fest miteinander verbunden, wobei die mechanischen Verbindungselemente 14 in der Befestigungsöffnung 13 gegenüber der Polfläche 11 versenkt aufgenommen sind. Das Statorjoch 7 ist im Bereich der Statorzähnen 8 ausgenommen, so dass die Statorzähnen 8 über die mechanischen Verbindungselemente 14 am Gehäuse 30 anliegen und verspannt werden. So können diese konstruktiv einfach am Scheibenläufermotor 1 befestigt werden. Das Statorjoch 7 wird zudem durch die Spulen 17 der Statorwicklungen 18 zwischen Statorzahn 8 und Gehäuse 30 axial in Position gehalten.

Um die mechanischen Verbindungselemente 14 gegenüber der Polfläche 11 versenkt in der Befestigungsöffnung 13 aufzunehmen, weist hierzu die Befestigungsöffnung 13 ein Loch 15 und ein an dieses Loch 15 und die Polfläche 11 des Statorzahns 8 anschließende Vertiefung 16 auf. Der Schaft des mechanischen Verbindungselements 14, insbesondere der Schraube 14.1, ragt dabei durch das Loch 15 der Befestigungsöffnung 13. Die Vertiefung 16 weist gegenüber dem Loch 15 einen größeren Querschnitt auf, wodurch diese dazu geeignet ist, beispielsweise den Kopf eines mechanischen Verbindungselements 14, insbesondere einer Schraube 14.1, aufzunehmen. Das mechanische Verbindungselement 14 ist dabei vollständig im Statorzahn 8 versenkt, wodurch eine kompaktere Bauform des Scheibenläufermotors 1 erreicht wird.

Insbesondere handelt es sich bei dem mechanischen Verbindungselement 14 um eine Schraube 14.1, nämlich um eine Dehnschraube, wodurch ein besonders standfester Scheibenläufermotors 1 geschaffen wird. Vorteilhafterweise können dazu in dem Gehäuse 30 Gewindebohrungen vorgesehen sein um die mechanischen Verbindungselemente 14 aufzunehmen und eine einfache Verbindung zwischen Statorzahn 8 und Gehäuse 30 zu ermöglichen. Die Schraube 14.1 ist sohin mit dem Gehäuse 30 verschraubt.

Im Allgemeinen wird erwähnt, dass neben dem mechanischen Halten des Statorjochs 7 am Statorzahn 8 auch vorstellbar ist, diese über eine stoffschlüssige Verbindung miteinander fest zu verbinden bzw. damit die mechanischen Verbindungselemente 14 zu sichern.

Wie insbesondere aus der Draufsicht in Fig. 2 und aus der Schnittansicht in Fig. 3 zu erkennen, steht der Zahnkopf 10 des Statorzahns 8 dessen Zahnhals 9 radial über, wodurch die Polfläche 11 des Statorzahns 8 deutlich vergrößert und damit höhere Drehmoment- und Leistungsdichten im Scheibenläufermotor 1 erreicht werden können.

Wie insbesondere der Fig. 3 entnommen werden kann, sind die Befestigungsöffnungen 13 an der Polfläche 11 durch eine Kappe 20 aus einem weichmagnetischen Pulverwerkstoff verschlossen. Dadurch kann eine Verminderung der magnetisch aktiven Polfläche 11 trotz der durch die Polfläche 11 reichenden Befestigungsöffnung 13 vermieden werden.

Das Statorjoch 7 weist zudem eine, insbesondere schlitzförmige Freistellung 19 auf, welche sich ausgehend von einer radialen Seite 22, 23 des Statorjochs 7 bis hin zum Statorzahn 8 radial erstreckt. Wie in der Fig. 2 dargestellt kann sich die Freistellung 19 sowohl von der inneren radialen Seite 22, als auch von der äußeren radialen Seite 23 des Statorjochs 7 bis hin zum Statorzahn 8 erstrecken. Die Freistellung 19 durchdringt dabei das Statorjoch 7 in axialer Richtung vollständig, wodurch über die Statorzähne 8 in das Statorjoch 7 eingeleitete magnetische Kreisströme unterdrückt werden, da diese nicht durch die Freistellung 19 im Statorjoch 7 fließen können. Zudem verhindert das elektrisch schlecht leitende SMC-Material der Statorzähne 8, dass ein elektrischer Rückschluss über ebendiese erfolgt. Die Leistungsdichte des Scheibenläufermotors 1 kann somit deutlich erhöht werden.

## Patentansprüche

1. Scheibenläufermotor mit mindestens einem Rotor (2), mit wenigstens einem Stator (3), der ein Statorjoch (7) und mindestens einen aus einem weichmagnetischen Pulverwerkstoff hergestellten Statorzahn (8) aufweist, welcher Statorzahn (8) einen Zahnhals (9) und einen an den Zahnhals (9) anschließenden und die Polfläche (11) des Statorzahns (8) ausbildenden Zahnkopf (10) aufweist, und mit einem Befestigungsmittel (12), **dadurch gekennzeichnet, dass** der Statorzahn (8) eine Befestigungsöffnung (13) aufweist, welche von der Polfläche (11) des Statorzahns (8) ausgehend dessen Zahnkopf (10) und Zahnhals (9) durchdringt, und dass das Befestigungsmittel (12) mindestens ein mechanisches Verbindungselement (14) umfasst, das in der Befestigungsöffnung (13) gegenüber der Polfläche (11) versenkt aufgenommen ist und den Statorzahn (8) am Scheibenläufermotor (1) befestigt.

2. Scheibenläufermotor nach Anspruch 1, **dadurch gekennzeichnet, dass** der Scheibenläufermotor (1) ein Gehäuse (30) aufweist, und dass das Verbindungselement (14) am Gehäuse (30) befestigt ist.

3. Scheibenläufermotor nach Anspruch 1 oder 2, **dadurch gekennzeichnet, dass** das Statorjoch (7) eine, insbesondere axial verlaufende, Aufnahme (21) aufweist, in welche der Zahnhals (9) des Statorzahns (8) eingesetzt ist.

4. Scheibenläufermotor nach Anspruch 3, **dadurch gekennzeichnet, dass** der Zahnhals (9) des Statorzahns (8) durch die das Statorjoch (7) durchdringende Aufnahme (21) verläuft.

5. Scheibenläufermotor nach einem der Ansprüche 1 bis 4, **dadurch gekennzeichnet, dass** der Statorzahn (8) aus SMC besteht.

6. Scheibenläufermotor nach einem der Ansprüche 1 bis 5, **dadurch gekennzeichnet, dass** das Statorjoch (7) von einem Blechpaket (7.1) ausgebildet wird.

7. Scheibenläufermotor nach einem der Ansprüche 1 bis 6, **dadurch gekennzeichnet, dass** das mechanische Verbindungselement (14) eine Schraube (14.1), insbesondere eine Dehnschraube, ist.

8. Scheibenläufermotor nach einem der Ansprüche 1 bis 7, **dadurch gekennzeichnet, dass** die Befestigungsöffnung (13) ein Loch (15) und eine an das Loch (15) und an die Polfläche (11) des Zahnkopfs (10) anschließende Vertiefung (16) aufweist, die eine gegenüber dem Loch (15) größere Querschnittsfläche aufweist.

9. Scheibenläufermotor nach einem der Ansprüche 1 bis 8, **dadurch gekennzeichnet, dass** der Zahnkopf (10) dem Zahnhals (9) radial übersteht.

10. Scheibenläufermotor nach einem der Ansprüche 1 bis 9, **dadurch gekennzeichnet, dass** die Befestigungsöffnung (13) an der Polfläche (11) durch eine Kappe (20) aus einem weichmagnetischen Pulverwerkstoff verschlossen ist.

11. Scheibenläufermotor nach einem der Ansprüche 1 bis 10, **dadurch gekennzeichnet, dass** das Statorjoch (7) eine, insbesondere schlitzförmige, Freistellung (19) aufweist, die sich ausgehend von einer radialen Seite (22, 23) des Statorjochs (7) bis hin zum Statorzahn (8) erstreckt.

12. Scheibenläufermotor nach Anspruch 11, **dadurch gekennzeichnet, dass** die Freistellung (19) radial verläuft.

13. Scheibenläufermotor nach Anspruch 11 oder 12, **dadurch gekennzeichnet, dass** die Freistellung (19) das Statorjoch (7) durchdringt.

14. Scheibenläufermotor nach einem der Ansprüche 1 bis 13, **dadurch gekennzeichnet, dass** der Scheibenläufermotor eine Statorwicklung (18) aufweist, die den Zahnhals (8) bewickelt.
